Europäisches Patentamt

European Patent Office

Office européen des brevets

(19)

(11) Numéro de publication: **0 312 481**
**A2**

(12) # DEMANDE DE BREVET EUROPEEN

(21) Numéro de dépôt: **88500083.6**

(22) Date de dépôt: **14.09.88**

(51) Int. Cl.⁴: **G 06 K 11/06**
**G 01 S 5/18**

(30) Priorité: **16.09.87 ES 8702666**

(43) Date de publication de la demande:
**19.04.89 Bulletin 89/16**

(84) Etats contractants désignés:
**AT BE CH DE FR GB GR IT LI LU NL SE**

(71) Demandeur: **Ezquerra Perez, José Manuel**
**Santa Engracia, 93-1 piso A**
**E-28010 Madrid (ES)**

**Sanchez Fernandez, Francisco José**
**Santa Engracia, 93-1 piso A**
**E-28010 Madrid (ES)**

**Nombela Lopez, Javier**
**Santa Engracia, 93-1 piso A**
**E-28010 Madrid (ES)**

(72) Inventeur: **Ezquerra Perez, José Manuel**
**Santa Engracia, 93-1 piso A**
**E-28010 Madrid (ES)**

**Sanchez Fernandez, Francisco José**
**Santa Engracia, 93-1 piso A**
**E-28010 Madrid (ES)**

**Nombela Lopez, Javier**
**Santa Engracia, 93-1 piso A**
**E-28010 Madrid (ES)**

(74) Mandataire: **Urizar Anasagasti, Jesus Maria**
**Doctor Fleming, 43**
**E-28036 Madrid (ES)**

Le titre de l'invention a été modifié (Directives relatives à l'examen pratiqué à l'OEB, A-III, 7.3)

(54) **Procédé de détermination de la position et de l'état d'un objet au moyen d'ultrasons.**

(57) Procédé de détermination de la position et de l'état d'un objet sur une surface quelconque au moyen d'ultrasons.

Ce procédé détermine la position et l'état dans lesquels se trouve un objet sur une surface quelconque par rapport à un point préétabli de celle-ci et avec la précision requise pour les objectifs envisagés. Ce procédé se caractérise par l'utilisation d'un émetteur d'ultrasons adossé à l'objet en question et de deux ou plusieurs récepteurs, de telle sorte que la connaissance du temps nécessaire pour qu'un signal ultrasonique atteigne chacun des récepteurs utilisés à partir de l'objet nous permettra de déterminer la position de ce dernier.

## Description

## PROCEDE DE DETERMINATION DE LA POSITION ET DE L'ETAT D'UN OBJET SUR UNE SURFACE QUELCONQUE AU MOYEN D'ULTRASONS

La présente invention se rapporte à un procédé par lequel on détermine la position et l'état d'un objet sur une surface quelconque par rapport à une origine préétablie en utilisant des ultrasons.

Les procédés utilisés à cet effet par la technique déjà connue sont fondamentalement deux.

Le premier est basé sur des effets de résistance. L'objet dont nous voulons déterminer la position est pourvu d'une électrode et d'un dispositif dont l'actionnement produit un signal de détection. La résistance qui s'oppose au passage du signal dans les coordonnées X et Y est évaluée pour déterminer la position. A cette fin, la surface de travail a été traitée de façon adéquate, par exemple en déposant sur celle-ci plusieurs couches de graphite ou d'autres matières similaires.

Les inconvénients les plus importants de ce système résident dans l'impossibilité d'obtenir une précision optimale et dans la facilité avec laquelle il se produit des inexactitudes par variation de la pellicule de résistance ou par suite de la manipulation de l'objet par l'usager.

Le deuxième des procédés utilisés consiste dans la création d'une surface de travail dans laquelle on dispose, en forme de grillage, une série de fils conducteurs ou fils de fer. Ces systèmes, spécifiquement groupés en vue d'un fonctionnement électromagnétique, utilisent l'objet de visée pour envoyer des signaux à ladite configuration de fils en vue d'obtenir un paramètre sensible et variable fournissant une relation mesurable par rapport à sa position. La résolution de ces systèmes dépend de la distance de séparation entre les fils du grillage; l'obtention d'une séparation adéquate ainsi que la complexité des circuits nécessaires exigent des méthodes de fabrication compliquées et coûteuses.

Les avantages offerts par rapport aux systèmes existants par le procédé exposé plus loin sont multiples.

L'un des avantages les plus significatifs c'est la possibilité de renoncer à une surface physique préétablie sans avoir à réaliser des modifications dans le procédé. Son application à une surface quelconque,comme, par exemple, une table, une planche à dessin et, même, un écran (cathodique, de cristal liquide, plasma, etc.) ou toute autre surface de travail habituelle, fournira la situation de l'objet qui y est utilisé comme viseur. Ceci entraîne une réduction de coût du procédé et en permet l'application à des fins multiples telles que digitaliseur de plans ou schémas, mesureur de distances dans ces derniers, introducteur variable de données dans un ordinateur, etc.

Un autre avantage que nous pouvons souligner c'est qu'il n'est pas nécessaire qu'il existe une union physique entre l'objet de visée et le circuit correspondant destiné à en évaluer la position. Ce facteur, ajouté à ce qui a été mentionné plus haut, assure au procédé un haut degré de flexibilité et de commodité d'utilisation.

Le circuit nécessaire au procédé est d'une extrême simplicité. La résolution obtenue y est aisément modifiable sans qu'il soit nécessaire d'en augmenter sensiblement la complexité. Ceci réduit, une fois de plus, le coût du produit et en augmente la fiabilité grâce à la réduction du nombre d'éléments nécessaires.

C'est pourquoi l'objet de la présente invention réside dans un procédé de détermination de la position et de l'état d'un objet sur une surface quelconque compte tenu, entre autres, des critères exposés plus haut.

L'invention a également pour objet une série de formes préférées d'exécution dudit procédé qui découleront de la suivante description de celui-ci, illustrée par les schémas ci-joints.

- La figure 1 représente le procédé sous sa forme unidimensionnelle en vue d'une plus grande clarté de celui-ci.

- La figure 2 représente un procédé de détermination de la position de l'objet par rapport à un système bidimensionnel.

- La figure 3 représente les améliorations que l'on peut inclure à partir du système précédent.

- La figure 4 représente une série d'objets de visée possibles et de récepteurs préférés.

- La figure 5 représente le procédé sous une de ses formes.

- La figure 6 représente le procédé complet sous une de ses formes d'exécution préférées.

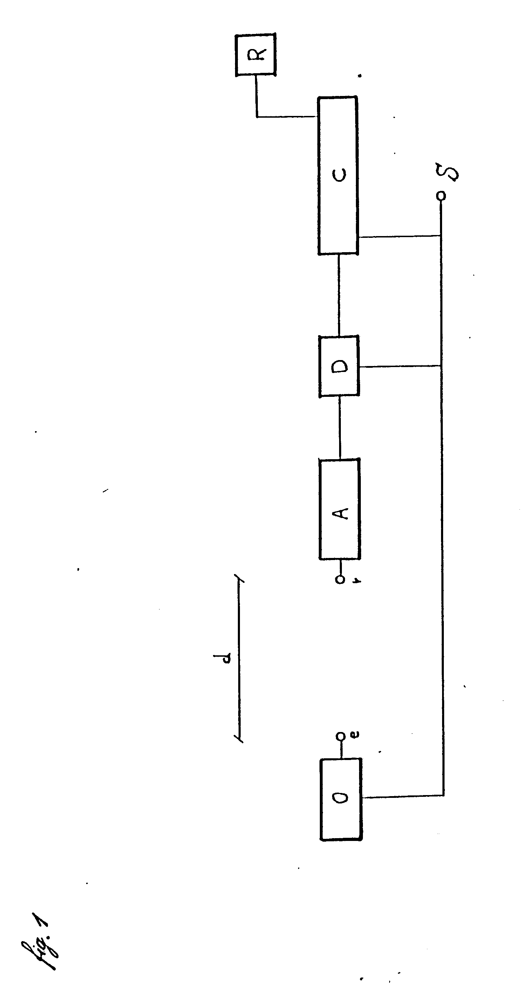

Afin d'obtenir une meilleure compréhension du procédé complet, la figure 1 schématise le fonctionnement pour déterminer la position unidimensionnelle d'un objet pourvu d'un oscillateur (O) et d'un émetteur d'ultrasons (e). Le circuit récepteur élémentaire se compose d'un récepteur d'ultrasons (r), d'un amplificateur (A), d'un détecteur de signal (D), d'un compteur de N bits (C) et d'une horloge (R) d'une fréquence f.

Le fonctionnement se réalise au moyen d'un signal (S) de synchronisation dont l'application active l'oscillateur (O), ce qui produit l'émission et, en même temps, le déclenchement du compteur d'impulsions (C) fournies par l'horloge (R).

A son arrivée au récepteur (r), le signal envoyé est amplifié (A) et active le détecteur de signal (D) produisant ainsi l'arrêt du compteur (C).

La distance d est déterminée par :

$$d = v \cdot t$$

où v est la vitesse du son et t le temps utilisé pour parcourir cette distance. La mesure du compteur (C) nous fournira cette durée.

La précision du mesurage effectué est fonction de la fréquence de l'horloge; ainsi donc :

$$\text{précision} = v \cdot \frac{1}{f}$$

où v est la vitesse du son et f la fréquence de l'horloge.

Ainsi, par exemple, si, à la température ambiante de 25° C, la vitesse du son est considérée comme une constante dont la valeur est de 343.000 mm/s :

f = 343 K Hz    précision = 1,0000 mm
f = 1 M Hz    précision = 0,3430 mm
f = 10 M Hz    précision = 0,0343 mm
f = 32 M Hz    précision = 0,0114 mm

Le nombre de bits (N) nécessaires dans le compteur est fonction de la distance maximum à mesurer et de la précision requise; ainsi donc :

$$2^N \geqslant \frac{\text{Distance maximum}}{\text{Précision}}$$

Ainsi, par exemple :
D max. = 1.000 mm / f = 334 K Hz    $N \geq 10$
D max. = 1.000 mm / f = 32 M Hz    $N \geq 17$
D max. = 2.000 mm / f = 334 K Hz    $N \geq 11$
D max. = 2.000 mm / f = 32 M Hz    $N \geq 18$

Pour déterminer la position de l'objet sur une surface, il est évident que nous aurons besoin de deux récepteurs de telle sorte que, ceux-ci étant situés en des points quelconques de ladite surface et les distances entre ceux-ci et l'objet étant connues, on obtienne comme résultat la situation de ce dernier par rapport à un point de référence désigné d'avance.

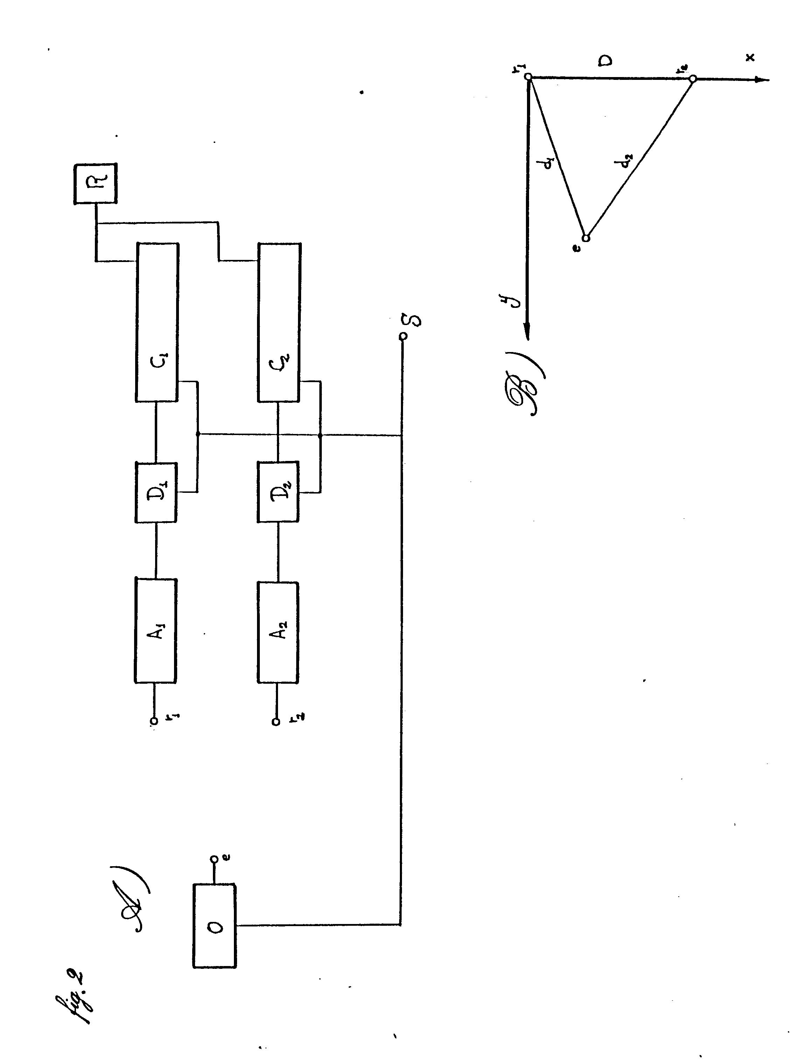

La figure 2 schématise le procédé en ajoutant un deuxième récepteur à la figure 1.

En répétant le processus signalé antérieurement pour un mesurage unidimensionnel et en utilisant le signal de synchronisme S pour déclencher les compteurs (($C_1$) et ($C_2$)), au moment où l'émission se produit, nous obtiendrons la mesure des temps $t_1$ et $t_2$ dont celle-ci a besoin pour atteindre les récepteurs (($r_1$) et ($r_2$)), de sorte que la distance jusqu'à ceux-ci se déterminera selon :

$d_1 = v \cdot t_1$
$d_2 = v \cdot t_2$

A titre d'exemple et en vue d'une plus grande simplicité de calcul, si nous situons les récepteurs de la façon indiquée sur la figure 1.B de sorte que $r_1$ se situe à l'origine d'un système imaginaire de coordonnées cartésiennes et $r_2$ à une distance D sur l'axe des abscisses, nous calculons par de simples calculs la position de l'émetteur (e) :

(1) $d_1^2 = x^2 + y^2 = (D - x)^2 + y^2 + 2.D.x - D^2$
(2) $d_2^2 = (D - x)^2 + y^2$
(1) - (2) $d_1^2 - d_2^2 = 2.Dx - D^2$

$$x = \frac{D^2 + 2_1^2 - d_2^2}{2.D} \qquad\qquad y = \sqrt{d_1^2 - x_2}$$

La résolution des équations qui précèdent nous donne la position de l'objet par rapport à l'origine établie.

Il se pose le problème des erreurs produites par le fait de considérer la vitesse du son comme une grandeur constante, alors que celle-ci est oumise à de multiples facteurs qui en provoquent la variation, tels que l'altitude, l'humidité ambiante, la non linéarité par rapport à la température, etc. En supposant la vitesse du son égale à 343 m/s, l'erreur produite dans les calculs s'évèrait à :

$$\text{erreur} = \left| \frac{343 - \text{Vitesse réelle}}{343} \right|$$

ce qui signifie, par exemple qu'une variation de 1 m/s de cette vitesse équivaut à-peu-près à une erreur de 3 mm par mètre mesuré.

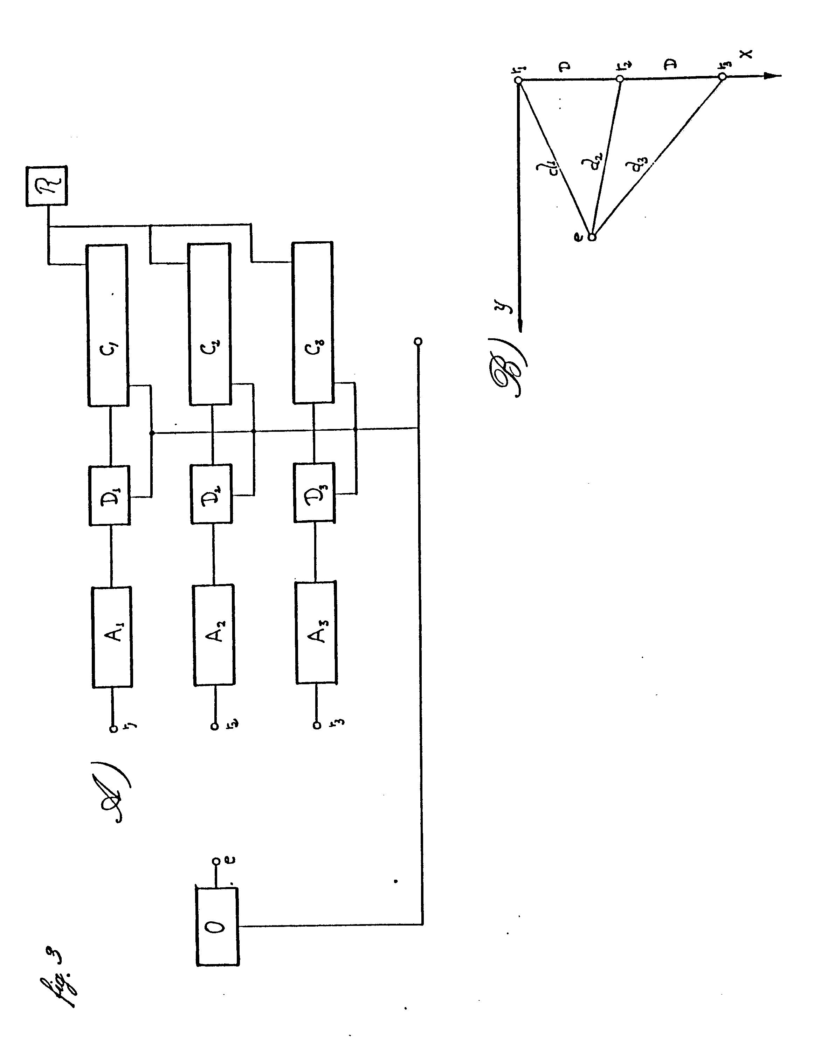

Pour corriger ces erreurs, on propose l'installation d'un troisième récepteur (figure 3) sur la surface. Situés en des points quelconques de la surface, ces récepteurs nous permettront de déterminer la position par rapport à une origine arbitraire, indépendamment de la vitesse du son.

La figure 3 schématise le procédé en ajoutant un troisième récepteur à la figure 2.

En répétant le processus mentionné plus haut pour un et pour deux récepteurs, nous obtiendrons les temps requis par le signal ultrasonique émis pour atteindre les trois récepteurs ($t_1$, $t_2$ et $t_3$).

A titre d'exemple et, une fois de plus, en vue d'une plus grande simplicité de calcul, nous disposons les récepteurs de la façon indiquée sur la figure 2.B, de telle sorte que $r_1$ se situe à l'origine d'un système imaginaire de coordonnées cartésiennes, $r_2$ à une distance D de celui-ci et $r_3$ à une distance D du précédent, tous deux sur l'axe des abscisses. Selon la figure 2.B, nous aurons :

$$(1) \quad d_1^2 = v^2 \cdot t_1^2 = x^2 + y^2$$
$$(2) \quad d_2^2 = v^2 \cdot t_2^2 = (D - x)^2 + y^2$$
$$(3) \quad d_3^2 = v^2 \cdot t_3^2 = (2.D - x)^2 + y^2$$
$$(1) \quad v^2 \cdot t_1^2 = (D - x)^2 + y^2 - D^2 + 2.D.x = (4)$$
$$(3) \quad v^2 \cdot t_3^2 = (2.D - x)^2 + y^2 - 4.D^2 + 4.D.x = (5)$$
$$(1) - (4) \quad v^2 \cdot (t_1^2 - t_2^2) = 2.D.x - D^2 = (6)$$
$$(1) - (5) \quad v^2 \cdot (t_1^2 - t_3^2) = 4.D.x - 4.D^2 = (7)$$

$$\frac{(6)}{(7)} = \frac{t_1^2 - t_2^2}{t_1^2 - t_3^2} = \frac{2.x - D}{4.x - 4.D}$$

$$x = \frac{D}{2} \quad \frac{4 \cdot t_2^2 - 3 \cdot t_1^2 - t_3^2}{2 \cdot t_2^2 - t_3^2 - t_1^2}$$

$$\text{et de} \quad (1) \cdot t_2^2 - (2) \cdot t_1^2 \; :$$

$$x \cdot t_2^2 + t_2^2 \cdot y^2 = t_1^2 \cdot (D - x)^2 + y^2 \cdot t_1^2$$

$$y = \sqrt{\frac{t_1^2 \cdot (2.D.x - D^2)}{t_1^2 - t_2^2} - x^2}$$

L'indétermination qui se produit dans $t_1^2 = t_2^2$ a lieu lorsque l'objet se trouve sur la droite $x = D/2$. Pour déterminer la position de y sur cette droite, nous réalisons la substitution de $x = D/2$ dans (2) et (3), de sorte que :

$$(2) - (3) \quad y^2 \cdot \left(\frac{t_2^2}{t_3^2} - 1\right) = \frac{D^2}{4} - \frac{9 \cdot D^2 . t_2^2}{4 \cdot t_3^2}$$

$$y = \frac{D}{2} \sqrt{\frac{t_3^2 - 9.t_2^2}{t_2^2 - t_3^2}}$$

En résumé, pour le cas de trois récepteurs et dans l'exemple concret qui nous occupe, les expressions qui nous déterminent la situation de l'objet par rapport à l'origine désignée, selon que nous nous trouvions ou pas sur la droite $x = D/2$, nous seraient fournies par :

Pour tout $t_1$, $t_2$, $t_3$ tel que $t_1 <> t_2$ :

$$x = \frac{D}{2} \cdot \frac{4 \cdot t_2^2 - 3 \cdot t_1^2 - t_3^2}{2 \cdot t_2^2 - t_3^2 - t_1^2}$$

$$y = \sqrt{\frac{t_1^2 \cdot (2 \cdot D \cdot x - D^2)}{t_1^2 - t_2^2} - x^2}$$

Si $t_1 = t_2$ :

$$x = D/2$$

$$y = \frac{D}{2} \sqrt{\frac{t_3^2 - 9 \cdot t_2^2}{t_2^2 - t_3^2}}$$

Il est donc démontré que les grandeurs x et y cherchées dépendent de la distance qui sépare les récepteurs entre eux et des temps requis pour que le signal les atteigne.

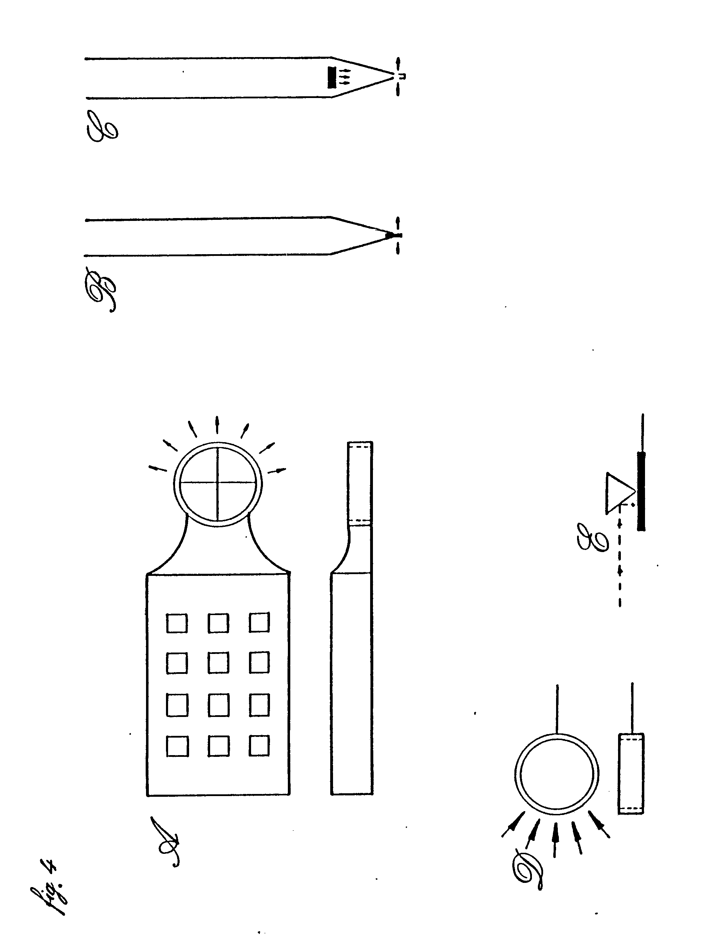

L'objet utilisé comme viseur et dont nous avons déterminé la position peut prendre la forme et les dimensions les plus appropriées aux objectifs poursuivis. Comme exemple et en raison de son utilité, on propose celui qui est schématisé sur la figure 4.A. Il consiste en un support s'adaptant le plus possible à la main et sur lequel est fixé le collimateur utilisé pour déterminer une position. Le support peut inclure un ou plusieurs interrupteurs ayant pour fonction d'envoyer des données. Cet aspect sera traité ultérieurement.

Le collimateur consiste en en anneau à l'intérieur duquel se situe un croisillon. L'anneau peut être piézo-électrique, de façon à ce que, lorsqu'il reçoit un signal fourni par un oscillateur, il vibre radialement et émet des ultrasons. La fréquence du signal dépendra du matériel utilisé et de ses dimensions.

D'autres types d'objets pourraient avoir la forme de stylets terminant par de petits émetteurs (figure 4.B) ou avec un émetteur intérieur et une ouverture le plus près possible de l'extrémité pour permettre la sortie du signal (fig. 4.C.) et, en général, tout objet avec lequel, que ce soit d'une façon radiale ou ponctuelle, nous puissions émettre un signal ultrasonique nous permettant d'en déterminer un point concret.

Les récepteurs utilisés peuvent également varier dans leur forme et leurs dimensions, le but poursuivi étant, de la même façon, de recevoir le signal de sorte à pouvoir déterminer un point concret de l'objet. A titre d'exemple, nous proposons celui qui est signalé à la figure 4.D, similaire à l'anneau décrit pour la figure 4.A et celui indiqué à la figure 4.E lequel, étant plan et parallèle à notre surface de travail, présente, en plus, un cône en une matière réfléchissant le son, de sorte que le signal émis à partir de n'importe quelle position arrive toujours équidistant à un point.

Les réalisations physiques et les utilités postérieures du procédé développé sont multiples.

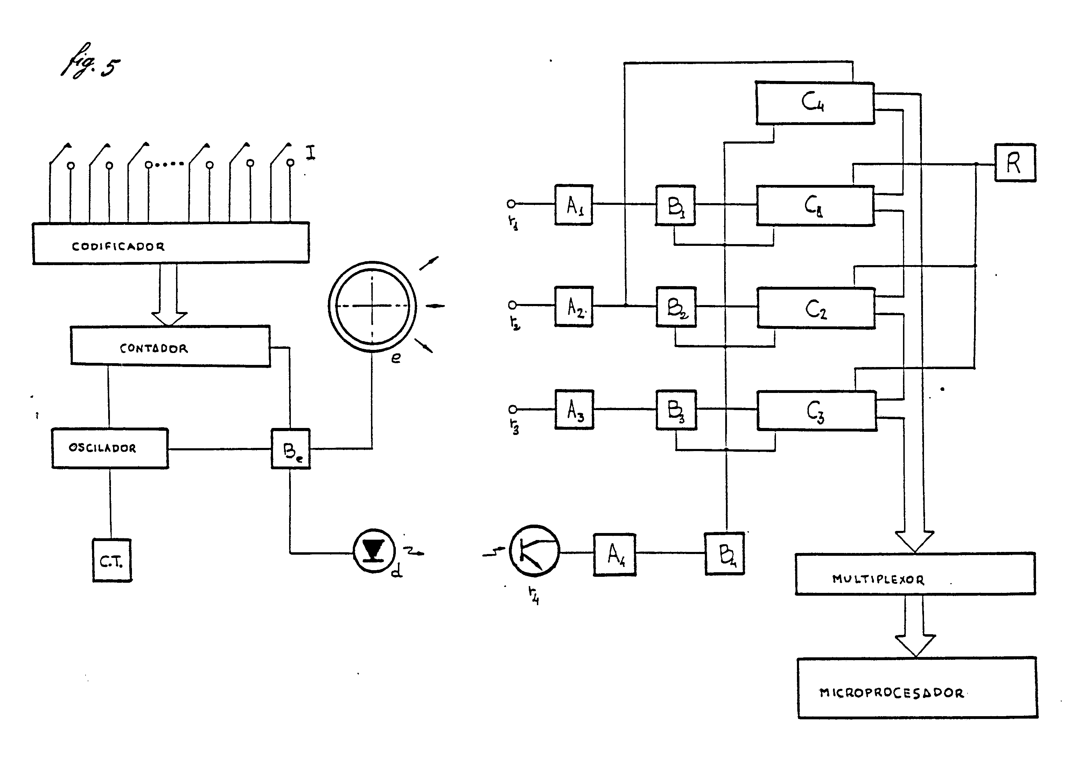

Comme une des réalisations possibles, on propose celle qui est schématisée à la figure 5 dont l'utilité serait d'introduire les positions souhaitées dans un système d'ordinateur en vue de leur traitement postérieur.

Un des avantages de ce procédé, signalé plus haut, consiste dans le fait que la connexion physique, à travers un câble par exemple, n'est pas nécessaire entre l'objet de visée émetteur et le système de réception. Ceci se traduit par un plus haut degré de souplesse et de commodité d'utilisation.

La figure 5 montre la façon dont ladite configuration se réaliserait et représente le système émetteur et le récepteur.

L'objet émetteur est composé par un ensemble d'interrupteurs (I) ; au moyen d'un codeur, on introduit l'état de ceux-ci dans un compteur d'impulsions. Au moyen d'un contrôleur de temps (C. T.) et selon l'intervalle programmé suivant le nombre de mesures que nous voulons réaliser, il est activé un oscillateur lequel, à une fréquence sélectionnée, activera un interrupteur électronique (Be), un générateur flip-flop par exemple, émettant une série d'impulsions dont le nombre sera marqué par le compteur. L'activation de l'interrupteur électronique détermine, à son tour, l'émission, à travers la diode (d), un signal d'infrarouges.

L'arrivée instantanée du signal d'infrarouges au système récepteur est détectée par le récepteur $r_4$. Le

signal amplifié actionne le générateur flip-flop ($B_4$) lequel déclenche, à son tour, les compteurs ($C_1$ à $C_4$) et les générateurs flip-flop ($B_1$ à $B_3$).

La méthode décrite antérieurement pour la figure 3 nous permet d'obtenir les temps ($t_1$ à $t_3$) requis par le signal ultrasonique pour atteindre les récepteurs ($r_1$ à $r_3$).

Comme on le voit sur la figure 5, le compteur $C_4$ contiendra le nombre d'impulsions émises.

Les données $t_1$ à $t_4$ passent, à travers un multiplexeur, à un microprocesseur ou, directement, à un système d'ordinateur qui traitera l'information reçue et obtiendra, suivant la méthode décrite plus haut, les coordonnées de l'endroit où le point se trouve et, directement de $t_4$, la configuration actuelle des interrupteurs de l'objet de visée.

Dans la réalisation possible du procédé décrit plus haut et schématisé à la figure 5, il n'existe pas de synchronisme entre l'objet émetteur et le système récepteur, ce qui se traduit par le fait que nous perdons une unité de précision. Cela est dû au fait que la réception par $r_4$ du signal infrarouge envoyé par la diode d et qui indique le début de l'émission ultrasonique déclenche les compteurs ($C_1$ à $C_3$); ceux-ci, cependant, ne se mettent en marche qu'à l'arrivée du premier flanc de hausse ou de baisse, selon les compteurs utilisés et l'horloge R. Le temps maximum pouvant s'écouler pour que ces compteurs commencent le comptage d'impulsions est donc d'un cycle d'horloge, ce qui, selon la description de précision qui précède et qui est inversément proportionnelle à la fréquence, entraîne la perte d'une unité de cette précision.

Ce fait étant connu, de multiples options pourront être adoptées. Une d'elles par exemple, pour continuer avec la figure 5, serait tout simplement de doubler la fréquence de travail de l'horloge R pour obtenir la précision souhaitée ou encore de synchroniser l'émission de ladite horloge; le contrôleur de temps C. T. devrait s'ajuster aux impulsions produites par R pour que l'on puisse connaître le moment exact où les compteurs $C_1$ à $C_3$ commencent le comptage des impulsions.

Une des formes préférées que l'on propose également pour l'exécution du procédé qui nous occupe élimine le problème qui précède et obtient un meilleur contrôle de l'émission en parvenant à ce que celle-ci se produise à l'instant souhaité et non pas suivant un intervalle de temps programmé d'avance.

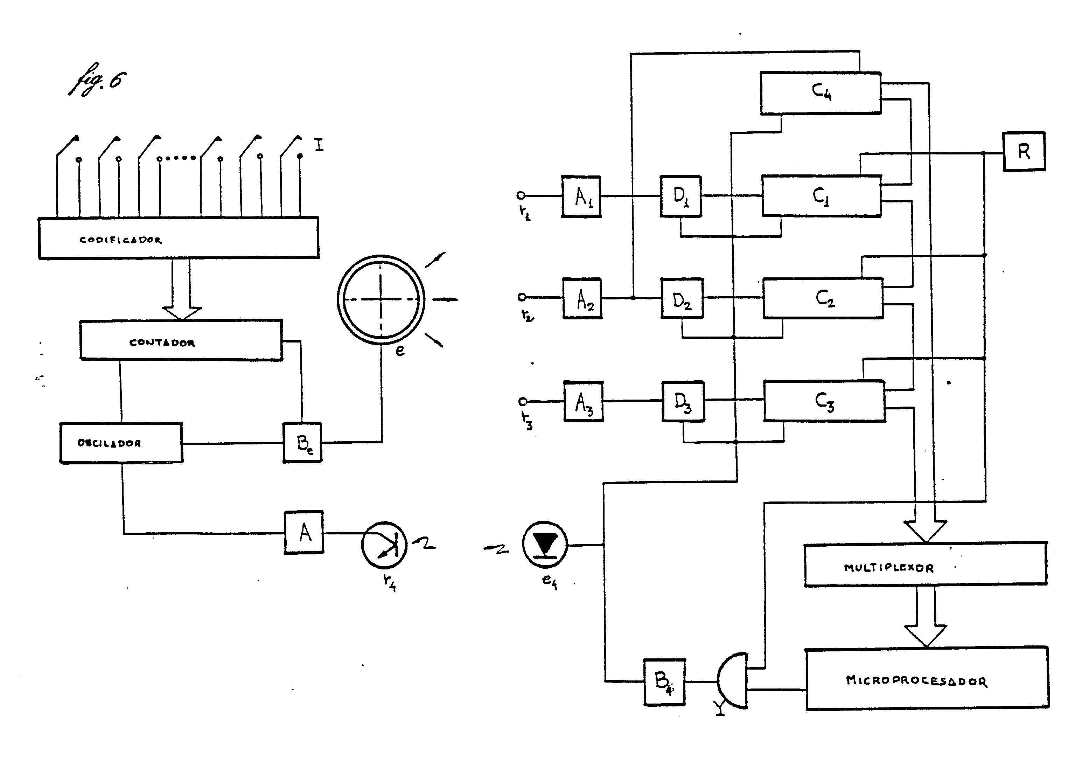

La figure 6 illustre cette réalisation possible. Le système est totalement analogue au système décrit antérieurement pour la figure 5, en variant la méthode par laquelle on détermine l'instant où l'émission se produit. Dans ce cas, la pétition de signal ultrasonique de l'émetteur se réalise à partir du système récepteur, c'est-à-dire que l'émetteur d'infrarouges se situe en réception et le récepteur correspondant en objet émetteur. De cette façon et toujours selon la figure 6, la ligne du microprocesseur que nous déterminerons pour la pétition d'une nouvelle mesure se connecte, ensemble avec l'horloge R, à une porte AND (Y). L'activation de cette ligne donnera, à la sortie de la porte AND, le signal fourni par l'horloge qui, selon le flanc de fonctionnement du générateur flip-flop $B_4$, actionnera ce générateur flip-flop et il se produira l'émission en $e_4$ ainsi que la mise en marche des compteurs ($C_1$ à $C_4$) et des détecteurs ($D_1$ à $D_3$). Les compteurs $C_1$, $C_2$ et $C_3$ commenceront le comptage des impulsions fournies par R et le récepteur d'infrarouges situé dans l'objet émetteur ($r_4$), après l'amplification du signal reçu, activera l'oscillateur et produira l'émission.

Après la synchronisation de l'instant où l'émission se produit avec le flanc requis du signal fourni par l'horloge R et suivant le procédé décrit pour la figure 5, les compteurs $C_1$ à $C_3$ contiendront les temps exacts requis par le signal d'ultrasons pour atteindre respectivement $r_1$, $r_2$ et $r_3$. Ces contenus, en même temps que $C_4$, passent, à travers le multiplexeur, au microprocesseur pour leur traitement et, en conséquence, pour la détermination requise de la position de l'objet et de l'état de celui-ci.

La façon dont le microprocesseur détermine que les compteurs disposent déjà des mesures sollicitées peut être obtenue par logiciel en programmant un laps de temps suffisamment long pour avoir la certitude de l'arrivée du signal aux trois récepteurs ultrasoniques. Ce temps dépendra de la distance maximum à parcourir par le signal émis jusqu'au récepteur le plus éloigné. On peut également l'obtenir par matériel (hardware) en connectant, par exemple, les lignes de sortie des détecteurs de signal $D_1$, $D_2$ et $D_3$ à une porte AND à trois entrées dont la sortie, connectée à la ligne d'entrée souhaitée du microprocesseur, indiquera à celui-ci que les mesures sont déjà disponibles. Le nombre de mesurages que l'on pourra réaliser par unité de temps dépendra donc de la distance maximum à laquelle on veut travailler avec l'objet de visée et de la vitesse du microprocesseur pour déterminer la position.

La flexibilité du présent procédé nous mènerait à de multiples réalisations. Dans le circuit, par exemple, on pourrait utiliser un microprocesseur avec les compteurs déjà incorporés comme entrées dudit microprocesseur, ce qui simplifierait encore plus le système récepteur. Grâce à sa simplicité, ce système serait également facile à intégrer, ce qui réduirait en conséquence le coût de la réalisation spécifiée.

A partir de l'objet émetteur, en adoptant la configuration de la figure 5, on pourrait envoyer l'état des interrupteurs de l'objet à travers l'émetteur d'infrarouges utilisé en ajoutant un décodeur au récepteur des infrarouges et en éliminant le compteur $C_4$ en réception.

Nous pourrions également éliminer le système d'infrarouges si nous synchronisons dans le temps l'émission et le déclenchement des compteurs ($C_1$ à $C_4$) en prenant un point de référence comme origine des mesures.

Comme réalisation simple, l'objet et le système récepteur pourraient, à leur tour, être unis par un câble flexible à travers lequel on synchroniserait l'émission avec le déclenchement des compteurs et au moyen duquel on transmettrait l'état des interrupteurs.

La visualisation de la position de l'objet pourrait se réaliser de façons multiples, selon l'application à laquelle le procédé décrit est destiné. Dans certaines applications spécifiques, on propose, indépendamment de sa coexistence éventuelle avec d'autres systèmes de visualisation, d'ajouter au procédé un système d'affichage au fonctionnement et à la forme considérés les plus appropriés et situé dans le système récepteur. Cet affichage, auquel il serait ajouté le contrôleur nécessaire, montrerait la position occupée à chaque instant par l'objet de visée. De la même façon, dans certaines réalisations, l'affichage et son contrôleur pourraient être dans l'objet lui-même; l'information de sa position pourra se faire en l'envoyant au moyen de l'émetteur d'infrarouges dans la réalisation de la figure 6 ou dans les configurations possibles où l'objet de visée et le système récepteur sont unis par un câble flexible.

Quoique le procédé ait été illustré et décrit en particulier par rapport à certaines formes préférées de son exécution, il est entendu qu'il est possible d'y réaliser divers changements de forme et de détail sans s'éloigner pour autant de l'esprit et sans sortir du cadre du procédé en question.

## Revendications

1ère - Procédé de détermination de la position et de l'état dans lesquels se trouve un objet sur une surface quelconque par rapport à un point préétabli de celle-ci et avec la précision requise pour les objectifs envisagés. Ce procédé se caractérise par l'utilisation d'un émetteur d'ultrasons adossé à l'objet en question et de deux ou plusieurs récepteurs, de telle sorte que la connaissance du temps nécessaire pour qu'un signal ultrasonique atteigne chacun des récepteurs utilisés à partir de l'objet nous permettra de déterminer la position de ce dernier.

2ème - Un dispositif, comme partie intégrante de la 1ère revendication, caractérisé par l'utilisation d'un émetteur d'ultrasons et d'un oscillateur; le temps requis par le signal émis pour atteindre le système récepteur est mesuré en utilisant un compteur pour les impulsions fournies par une horloge, dont la fréquence marquera la précision. Lorsque l'émission se produit, celle-ci déclenche le compteur en question et s'arrête grâce à un récepteur d'ultrasons qui, à l'arrivée du signal, active un générateur flip-flop qui produit cet arrêt.

3ème - Dispositif caractérisé par le fait de redoubler le système récepteur décrit à la 2ème revendication. La connaissance des temps requis par le signal émis pour atteindre chacun des deux récepteurs nous permettra de déterminer la position de l'objet sur la surface en question en fonction de la vitesse du son.

4ème - Dispositif caractérisé par le fait de tripler le système récepteur décrit à la 2ème revendication. La connaissance des temps requis par le signal émis pour atteindre chacun des trois récepteurs nous permettra de déterminer la position de l'objet sur la surface en question indépendamment de la vitesse du son.

5ème - Dispositif à utiliser comme objet de visée caractérisé par un support pouvant inclure un ou plusieurs interrupteurs, support sur lequel se trouve fixé un collimateur consistant en un anneau émetteur d'ultrasons à l'intérieur duquel se trouve disposé un croisillon.

6ème - Dispositif à utiliser comme objet de visée caractérisé par un stylet à l'extrémité duquel se trouve un petit émetteur d'ultrasons.

7ème - Dispositif à utiliser comme objet de visée caractérisé par un stylet à l'intérieur duquel se trouve un émetteur d'ultrasons et dont l'extrémité présente une petite ouverture pour la sortie de ces derniers.

8ème - Dispositif à utiliser comme récepteur, caractérisé par le fait d'utiliser un anneau céramique permettant de recevoir un signal ultrasonique de façon radiale.

9ème - Dispositif à utiliser comme récepteur, caractérisé par le fait d'utiliser une surface céramique sur un point de laquelle est situé un cone en une matière qui réfléchit le son.

10ème - Dispositif selon les revendications 3 et 4, caractérisé par l'utilisation d'un émetteur d'infrarouges accouplé à l'objet de visée, par lequel les compteurs se déclenchent lorsque l'émission ultrasonique se produit.

11ème - Dispositif selon les revendications 3 et 4, caractérisé par le fait d'utiliser un câble flexible pour synchroniser l'envoi du signal ultrasonique avec le déclenchement des compteurs.

12ème - Dispositif selon les revendications 3 et 4, caractérisé par le fait de synchroniser dans le temps l'envoi de signal et le déclenchement des compteurs et l'obtention préalable d'un point de référence.

13ème - Dispositif selon les revendicatons 3 et 4, caractérisé par le fait d'utiliser un émetteur d'infrarouges dans le système de réception, dispositif par lequel on synchronise, en ajoutant un récepteur d'infrarouges à l'objet de visée, l'émission et le déclenchement des compteurs par rapport au flanc souhaité d'une impulsion de l'horloge utilisée.

14ème - Dispositif selon la revendication 13, caractérisé par le fait d'envoyer l'état des interrupteurs de l'objet de visée en codant cet état dans le signal ultrasonique émis.

15ème - Dispositif selon la revendication 10, caractérisé par le fait d'envoyer l'état des interrupteurs de l'objet de visée, en codant cet état, dans le signal infrarouge de synchronisation.

16ème - Dispositif selon la revendication 11, caractérisé par le fait d'envoyer l'état des interrupteurs de l'objet de visée, en codant cet état, au moyen du câble utilisé pour la synchronisation.

17ème - Dispositif selon les revendications 11 et 12, caractérisé par le fait d'envoyer, en le codant, l'état des interrupteurs de l'objet de visée dans le signal ultrasonique émis.

18ème - Dispositif, sous n'importe laquelle des formes revendiquées plus haut, caractérisé par le fait d'incorporer au système récepteur un affichage pour la visualisation de la position et de l'état de l'objet de visée.

19ème - Dispositif, sous n'importe laquelle des formes revendiquées plus haut, caractérisé par le fait d'incorporer à l'objet de visée un affichage pour la visualisation de sa position et de son état.

20ème - Procédé selon la description faite à la 1ère revendication et auquel on peut ajouter la combinaison souhaitée de dispositifs revendiqués plus haut, caractérisé par le fait d'utiliser un système de réception aux formes et aux dimensions considérées les plus opportunes pour s'accoupler à n'importe quelle surface souhaitée sans besoin d'un traitement préalable de celle-ci et aux effets considérés nécessaires.

fig. 1

fig. 2

𝒜)

𝐵)

fig. 3

$\mathscr{A}$)

$A_1$    $D_1$    $C_1$

$A_2$    $D_2$    $C_2$

$A_3$    $D_3$    $C_3$

0   e

$R$

$r_1$

$r_2$

$r_3$

EP 0 312 481 A2

$\mathscr{B}$)  $y$

$r_1$

$d_1$

$D$

$e$

$d_2$

$r_2$

$d_3$

$D$

$r_3$

$X$

fig. 4

fig. 5

fig.6

EP 0 312 481 A2